# EUROPÄISCHE PATENTSCHRIFT

(11) **EP 3 642 073 B1**
(45) Veröffentlichungstag und Bekanntmachung des Hinweises auf die Patenterteilung: **10.03.2021**
(21) Anmeldenummer: 18735225.7
(22) Anmeldetag: 21.06.2018
(51) Int. Cl.: B60N 2/14, B60N 2/75, B60N 2/30

(54) **SITZ FÜR EIN KRAFTFAHRZEUG**
SEAT FOR A VEHICLE
SIÈGE POUR VÉHICULE

(30) Priorität: 22.06.2017 DE 102017005905
(43) Veröffentlichungstag der Anmeldung: 29.04.2020
(73) Patentinhaber: Audi AG, 85045 Ingolstadt (DE)
(72) Erfinder: HESSE, Alexander, 85113 Böhmfeld (DE); TOVAR, Johannes, 85049 Ingolstadt (DE); GAGULA, Viola Evelyn, 85051 Ingolstadt (DE); MAUL, Stefan, 85080 Gaimersheim (DE)
(86) Internationale Anmeldenummer: PCT/EP2018/066629
(87) Internationale Veröffentlichungsnummer: WO 2018/234480

(56) Entgegenhaltungen:
- DE-A1-102005 061 982
- DE-A1-102014 214 364

## Beschreibung

Die Erfindung betrifft einen Sitz für ein Kraftfahrzeug, mit einer Sitzauflage, mit einer Rückenlehne und mit einer Armauflage, nach der im Oberbegriff von Anspruch 1 näher definierten Art.

Ein gattungsgemäßer Sitz ist aus der DE 10 2014 214 364 A1 bekannt.

Aus der DE 10 2005 061 982 A1 ist ein Fahrzeugsitz mit einer in die Rückenlehne einfahrbaren Armlehne bekannt.

Ähnliche, zwischen einer Fahrposition, in der ein Fahrer des Kraftfahrzeugs die Steuerung desselben übernehmen kann, und einer Ruheposition, die eingenommen wird, wenn das Kraftfahrzeug autonom, d. h. ohne Eingriff des Fahrers, betrieben wird, verstellbare Sitze sind außerdem in der DE 42 26 747 C1 und EP 3 124 319 A1 beschrieben.

In jüngster Zeit gibt es Bestrebungen, Kraftfahrzeuge vollkommen autonom betreibbar auszuführen. Dabei kann der Fahrer gegebenenfalls wählen, ob er ein mit einer solchen Funktion ausgestattetes Kraftfahrzeug vollständig autonom betreiben oder zumindest einige Funktionen selbst übernehmen möchte. Insbesondere beim vollständig autonomen Betrieb des Kraftfahrzeugs ergeben sich Ansprüche des Fahrers, mehrere Sitzpositionen einnehmen zu wollen, nämlich zumindest eine Fahrposition und eine Ruheposition.

Dies stellt hohe Anforderungen an die Fahrzeugsitze, da diese nicht nur möglichst schnell zwischen den einzelnen Sitzpositionen bewegt werden, sondern auch in jeder Position ein angenehmes Sitzgefühl bieten sollen. Letzteres gilt insbesondere dann, wenn der Sitz bei der Bewegung von der Fahrposition in die Ruheposition um eine im Wesentlichen vertikale Achse gedreht wird, da in diesem Fall der Insasse nicht mehr exakt in Fahrtrichtung sitzt.

Es ist daher Aufgabe der vorliegenden Erfindung, einen Sitz für ein Kraftfahrzeug zu schaffen, der zwischen wenigstens zwei unterschiedlichen Positionen verstellbar ist und in beiden Positionen dem Insassen einen guten Sitzkomfort bietet.

Erfindungsgemäß wird diese Aufgabe durch die in Anspruch 1 genannten Merkmale gelöst.

Gemäß der vorliegenden Erfindung ist demnach die Armauflage mittels einer Antriebseinrichtung beweglich gelagert und führt bei einer Bewegung der Sitzauflage von der Fahrposition in die Ruheposition eine der Richtung der Drehbewegung der Sitzauflage entgegengesetzt gerichtete Drehbewegung relativ zu der Sitzauflage und damit auch relativ zu der Rückenlehne aus, sodass die in der Fahrposition gegebenenfalls nicht zugängliche bzw. nicht freigelegte Armauflage in der Ruheposition für den Insassen zugänglich ist.

Dies bietet dem den erfindungsgemäßen Sitz benutzenden Insassen des Kraftfahrzeugs einen gegenüber bekannten Lösungen wesentlich erhöhten Sitzkomfort, da ihm in der Ruheposition die Armauflage automatisch zur Verfügung steht und vorhandene Komfortflächen dennoch nicht verändert werden. Vielmehr befindet sich die Armauflage auf diese Weise stets in der optimalen Position, um dem Wunsch des Insassen nach maximalem Komfort entsprechen zu können.

In einer sehr vorteilhaften Weiterbildung der Erfindung kann vorgesehen sein, dass sich bei der Bewegung der Sitzauflage von der Fahrposition in die Ruheposition ein vorderer Bereich der Sitzauflage nach innerhalb des Kraftfahrzeugs bewegt. Durch diese Bewegung wird der Komfort für den Insassen noch weiter erhöht, da im inneren bzw. mittleren Bereich des Kraftfahrzeugs mehr Raum zur Verfügung steht als im äußeren Bereich und der Insasse damit eine höhere Beinfreiheit genießt und Kollisionen mit Bauteilen des Kraftfahrzeugs vermieden werden.

Als besonders vorteilhaft im Hinblick auf das Erreichen einer möglichst komfortablen Ruheposition einerseits und des Vermeidens von Kollisionen mit Bauteilen innerhalb des Kraftfahrzeugs andererseits hat es sich erwiesen, wenn der Winkel der Drehbewegung der Sitzauflage von der Fahrposition in die Ruheposition 10 bis 15° beträgt.

In einer weiteren vorteilhaften Ausgestaltung der Erfindung kann vorgesehen sein, dass die Armauflage in der Fahrposition in der Rückenlehne angeordnet ist. Durch die Anordnung der Armauflage in der Rückenlehne ist diese in der Fahrposition verborgen und nimmt daher keinen zusätzlichen Bauraum ein.

Des Weiteren kann vorgesehen sein, dass die Armauflage mittels einer Führung gegenüber der Rückenlehne beweglich gelagert ist. Dies gewährleistet ein sicheres Bewegen der Armauflage gegenüber der Rückenlehne und damit eine zuverlässige Funktion des erfindungsgemäßen Sitzes.

Um die Führung zu schützen und den erfindungsgemäßen Sitz optisch gefälliger zu gestalten, kann des Weiteren vorgesehen sein, dass die Führung mittels einer Abdeckung abgedeckt ist.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: einen erfindungsgemäßen Sitz in einer Fahrposition;
- Fig. 2: den Sitz aus Fig. 1 in einer Ruheposition;
- Fig. 3: eine Seitenansicht des erfindungsgemäßen Sitzes;
- Fig. 4: eine Vorderansicht der Armauflage und ihrer Antriebseinrichtung;
- Fig. 5: eine Draufsicht auf die Armauflage und der Antriebseinrichtung; und
- Fig. 6: eine perspektivische Ansicht der Armauflage.

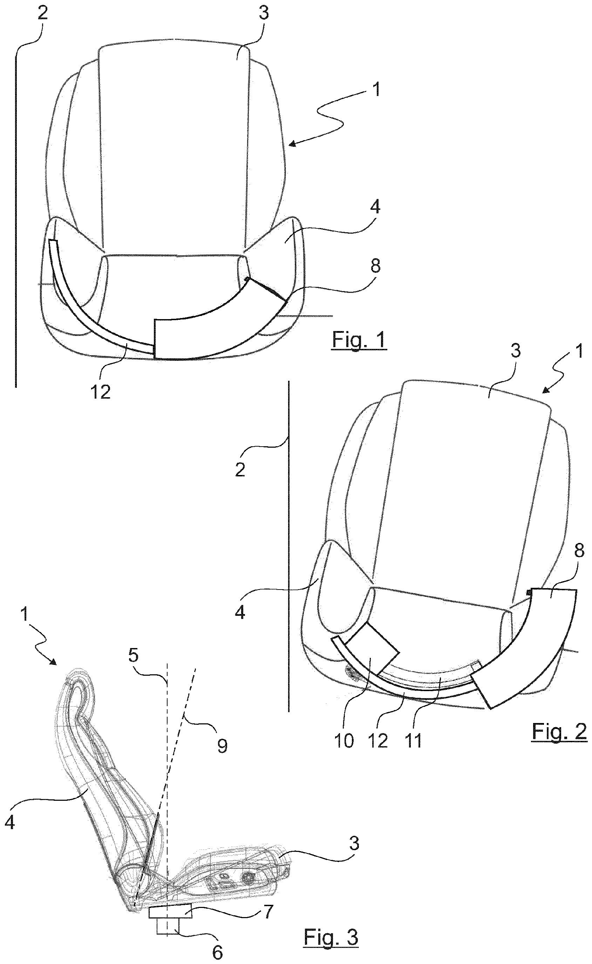

Fig. 1 zeigt einen Sitz 1 für ein in seiner Gesamtheit nicht dargestelltes Kraftfahrzeug. Von dem Kraftfahrzeug ist lediglich auf sehr schematische Weise eine Fahrertür 2 dargestellt. Der Sitz 1 weist in an sich bekannter Weise eine Sitzauflage 3 sowie eine Rückenlehne 4 auf. Die Sitzauflage 3 und damit auch die mit derselben verbundene Rückenlehne 4 ist um eine in Fig. 3 angedeutete, im Wesentlichen vertikale Drehachse 5 drehbar gelagert und mittels einer ebenfalls in Fig. 3 schematisch angedeuteten Antriebseinrichtung 6 von einer in Fig. 1 dargestellten Fahrposition in eine in Fig. 2 dargestellte Ruheposition bringbar. Mit der Angabe "im Wesentlichen vertikal" sind Winkelabweichungen der Drehachse 5 von einigen Grad gegenüber der Vertikalen umfasst. Im vorliegenden Fall ist die Sitzauflage 3 über einen vorzugsweise an der Karosserie des Kraftfahrzeugs gelagerten Drehteller 7, der von der Antriebseinrichtung 6 angetrieben werden kann, drehbar gelagert.

Während ein nicht dargestellter Fahrer des Kraftfahrzeugs in der Fahrposition die Steuerung des Kraftfahrzeugs in an sich bekannter Weise übernehmen kann, wird die Ruheposition dann eingenommen, wenn das Kraftfahrzeug autonom, d. h. ohne Eingriff des Fahrers, betrieben wird.

Bei der Bewegung der Sitzauflage 3 von der Fahrposition in die Ruheposition bewegt sich ein vorderer Bereich bzw. die Vorderkante der Sitzauflage 3 nach innerhalb des Kraftfahrzeugs, also von der Fahrertür 2 weg. In den Figuren 1 und 2 ist der Sitz 1 als Fahrersitz ausgebildet. Demnach erfolgt die Drehung desselben im Uhrzeigersinn. Bei einem Beifahrersitz oder im Falle eines rechts gelenkten Kraftfahrzeugs würde sich der Sitz 1 entgegen dem Uhrzeigersinn nach innerhalb des Kraftfahrzeugs drehen. Vorzugsweise können der Fahrersitz und der Beifahrersitz unabhängig voneinander gesteuert werden. Die Bewegung des Beifahrersitzes kann jedoch gegebenenfalls mit der Bewegung des Fahrersitzes gekoppelt sein und simultan erfolgen. Der Winkel der Drehbewegung der Sitzauflage 1 von der Fahrposition in die Ruheposition beträgt vorzugsweise 10° bis 15°, insbesondere 12°. Dieser Winkel ist jedoch abhängig von den Platzverhältnissen im Innenraum des Kraftfahrzeugs.

Der Sitz 1 weist des Weiteren eine Armauflage 8 auf, die, wie aus Fig. 1 hervorgeht, in der Fahrposition innerhalb der Rückenlehne 4 angeordnet ist. Die Armauflage 8 ist um eine weitere Drehachse 9 drehbar gelagert, die ebenfalls in Fig. 3 dargestellt ist und die im vorliegenden Fall um einen Winkel von 10 - 20°, insbesondere 15°, gegenüber der Vertikalen und demnach auch gegenüber der Drehachse 5 der Sitzauflage 3 geneigt ist. Dadurch bewegt sich die Armauflage 8 bei ihrer Bewegung relativ zu der Rückenlehne 4 nach unten.

Die Armauflage 8 ist mittels einer weiteren Antriebseinrichtung 10 derart beweglich, dass die Armauflage 8 bei der Bewegung der Sitzauflage 3 von der Fahrposition in die Ruheposition eine der Richtung der Drehbewegung der Sitzauflage 3 entgegengesetzt gerichtete Drehbewegung ausführt. Wenn sich also die Sitzauflage 3 im Uhrzeigersinn dreht, dreht sich die Armauflage 8 im Gegenuhrzeigersinn und umgekehrt. Dadurch wird die Armauflage 8, wie in Fig. 2 dargestellt, aus der Rückenlehne 4 herausgefahren und ist somit für eine den Sitz 1 benutzende Person zugänglich. Diese Bewegung der Armauflage 8 kann gesteuert bzw. automatisch erfolgen, wozu beispielsweise die Antriebseinrichtung 10 entsprechend angesteuert werden kann. Der Winkel der Drehbewegung der Armauflage 8 bei der Bewegung der Sitzauflage 3 von der Fahrposition in die Ruheposition relativ zu der Rückenlehne 4 beträgt vorzugsweise 40° bis 45°, insbesondere 42°. Auch dieser Winkel hängt von den Platzverhältnissen im Innenraum des Kraftfahrzeugs ab.

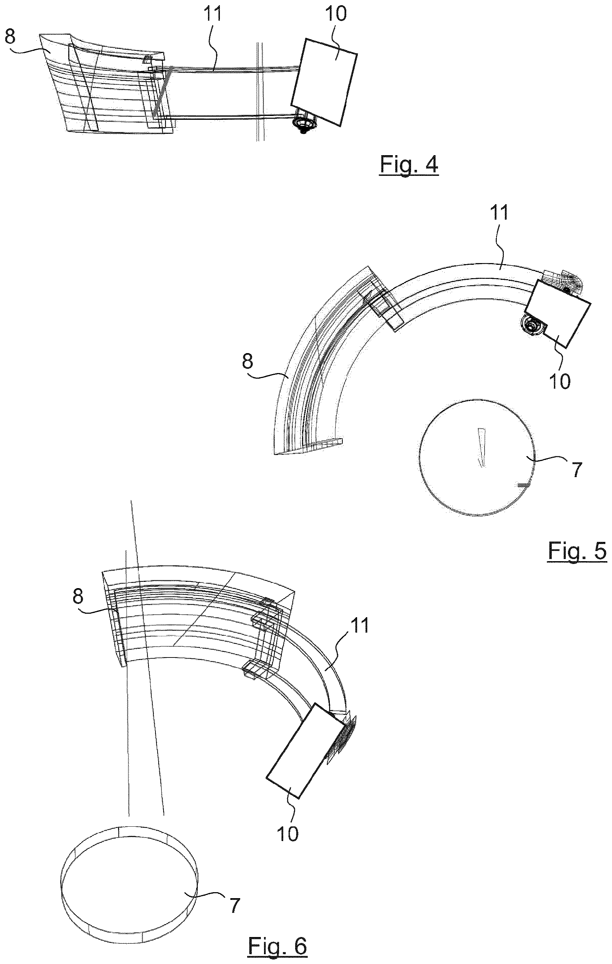

Die Armauflage 8 und deren Antriebseinrichtung 10 ist in den Figuren 4, 5 und 6 detaillierter dargestellt. Die Armauflage 8 ist mittels einer Führung 11 gegenüber der Rückenlehne 4 beweglich gelagert. Dabei ist die Führung 11, die beispielsweise zwei Schienen aufweisen kann, an denen die Armauflage 8 geführt ist, mittels einer Abdeckung 12 abgedeckt. Die Abdeckung 12, die mit der Armauflage 8 verbunden und vorzugsweise in Form eines dünnen Blechs ausgebildet ist, dient zum Verdecken eines nicht dargestellten Spalts, der durch die Drehung der Armauflage 8 entsteht.

Um eine bessere Anpassung der Führung 11 an die Struktur der Rückenlehne 4 zu erreichen und insbesondere um die Drehbewegung mit möglichst geringem Aufwand realisieren zu können, ist die Führung 11 gekrümmt und die Antriebseinrichtung 10 der Armauflage 8 ist mittels einer nicht dargestellten flexiblen Welle mit der Armauflage 8 verbunden. Bei der Antriebseinrichtung 10 kann es sich um einen Elektromotor handeln, der ähnlich einem bei Schiebedächern eingesetzten Elektromotor arbeitet.

## Patentansprüche

1. Sitz (1) für ein Kraftfahrzeug, mit einer Sitzauflage (3), mit einer Rückenlehne (4) und mit einer Armauflage (8), wobei die Sitzauflage (3) um eine im Wesentlichen vertikale Drehachse (5) drehbar gelagert und mittels einer Antriebseinrichtung (6) von einer Fahrposition in eine Ruheposition bringbar ist,
**dadurch gekennzeichnet, dass**
die Armauflage (8) drehbar gelagert und mittels einer Antriebseinrichtung (10) derart beweglich ist, dass die Armauflage (8) bei einer Bewegung der Sitzauflage (3) von der Fahrposition in die Ruheposition eine der Richtung der Drehbewegung der Sitzauflage (3) entgegengesetzt gerichtete Drehbewegung ausführt.

2. Sitz nach Anspruch 1,
**dadurch gekennzeichnet, dass**
sich bei der Bewegung der Sitzauflage (3) von der Fahrposition in die Ruheposition ein vorderer Bereich der Sitzauflage (3) nach innerhalb des Kraftfahrzeugs bewegt.

3. Sitz nach Anspruch 1 oder 2,
**dadurch gekennzeichnet, dass**
der Winkel der Drehbewegung der Sitzauflage (3) von der Fahrposition in die Ruheposition 10 bis 15° beträgt.

4. Sitz nach Anspruch 1, 2 oder 3,
**dadurch gekennzeichnet, dass**
die Armauflage (8) in der Fahrposition in der Rückenlehne (4) angeordnet ist.

5. Sitz nach einem der Ansprüche 1 bis 4,
**dadurch gekennzeichnet, dass**
die Armauflage (8) mittels einer Führung (11) gegenüber der Rückenlehne (4) beweglich gelagert ist.

6. Sitz nach Anspruch 5,
**dadurch gekennzeichnet, dass**
die Führung (11) mittels einer Abdeckung (12) abgedeckt ist.

7. Sitz nach Anspruch 5 oder 6,
**dadurch gekennzeichnet, dass**
die Führung (11) gekrümmt ist, und dass die Antriebseinrichtung (10) der Armauflage (8) mittels einer flexiblen Welle mit der Armauflage (8) verbunden ist.

8. Sitz nach einem der Ansprüche 1 bis 7,
**dadurch gekennzeichnet, dass**
der Winkel der Drehbewegung der Armauflage (8) bei der Bewegung der Sitzauflage (3) von der Fahrposition in die Ruheposition relativ zu der Rückenlehne (4) 40 bis 45° beträgt.

9. Sitz nach einem der Ansprüche 1 bis 8,
**dadurch gekennzeichnet, dass**
die Armauflage (8) um eine die Drehachse (9) drehbar ist, die um einen Winkel von 10 - 20° gegenüber der Vertikalen geneigt ist.

10. Sitz nach einem der Ansprüche 1 bis 9,
**dadurch gekennzeichnet, dass**
die Sitzauflage (3) über ein Drehteller (7) gegenüber einer Karosserie des Kraftfahrzeugs drehbar gelagert ist.

## Claims

1. Seat (1) for a motor vehicle, having a seat support (3), having a backrest (4) and having an armrest (8), wherein the seat support (3) is mounted so as to be rotational about a substantially vertical rotational axis (5) and is able to be brought from a driving position into a resting position by means of a drive apparatus (6),
**characterised in that**
the armrest (8) is rotatably mounted and is able to be moved by means of a drive apparatus (10) such that, in the case of a movement of the seat support (3) from the driving position into the resting position, the armrest (8) executes a rotational movement aligned oppositely to the direction of the rotational movement of the seat support (3).

2. Seat according to claim 1,
**characterised in that**
when the seat support (3) is moved from the driving position into the resting position a front region of the seat support (3) moves towards the interior of the motor vehicle.

3. Seat according to claim 1 or 2,
**characterised in that**
the angle of the rotational movement of the seat support (3) from the driving position into the resting position is 10 to 15°.

4. Seat according to claim 1, 2 or 3,
**characterised in that**
in the driving position, the armrest (8) is arranged in the backrest (4).

5. Seat according to any of claims 1 to 4,
**characterised in that**
the armrest (8) is mounted so as to be movable by means of a guide (11) with respect to the backrest (4).

6. Seat according to claim 5,
**characterised in that**
the guide (11) is covered by means of a cover (12).

7. Seat according to claim 5 or 6,
**characterised in that**
the guide (11) is curved, and that the drive apparatus (10) of the armrest (8) is connected with the armrest (8) by means of a flexible shaft.

8. Seat according to any of claims 1 to 7,
**characterised in that**
the angle of the rotational movement of the armrest (8) in relation to the backrest (4) during the movement of the seat support (3) from the driving position into the resting position is 40 to 45°.

9. Seat according to any of claims 1 to 8,
**characterised in that**
the armrest (8) can be rotated about a the rotational axis (9) which is tilted at an angle of 10 - 20° with respect to the vertical.

10. Seat according to any of claims 1 to 9,
**characterised in that**
the seat support (3) is mounted so as to be rotatable by means of a rotary disc (7) with respect to a body of the motor vehicle.

## Revendications

1. Siège (1) pour un véhicule automobile, avec un support de siège (3), avec un dossier (4) et avec un accoudoir (8), dans lequel le support de siège (3) est monté de manière rotative autour d'un axe de rotation (5) sensiblement vertical et peut être amené d'une position de conduite à une position de repos au moyen d'un dispositif de propulsion (6),
**caractérisé en ce que**
l'accoudoir (8) est monté de manière rotative et peut être déplacé au moyen d'un dispositif de propulsion (10) de sorte que, lorsque le support de siège (3) est déplacé de la position de conduite à la position de repos, l'accoudoir (8) exécute un mouvement de rotation dirigé dans le sens opposé au sens du mouvement de rotation du support de siège (3).

2. Siège selon la revendication 1,
**caractérisé en ce que**
lors du déplacement du support de siège (3) de la position de conduite à la position de repos, une zone avant du support de siège (3) se déplace vers l'intérieur du véhicule automobile.

3. Siège selon la revendication 1 ou 2,
**caractérisé en ce que**
l'angle du mouvement de rotation du support de siège (3) de la position de conduite à la position de repos est de 10 à 15°.

4. Siège selon la revendication 1, 2 ou 3,
**caractérisé en ce que**
l'accoudoir (8) est disposé dans le dossier (4) en position de conduite.

5. Siège selon l'une quelconque des revendications 1 à 4,
**caractérisé en ce que**
l'accoudoir (8) est monté de façon mobile par rapport au dossier (4) au moyen d'un guide (11).

6. Siège selon la revendication 5,
**caractérisé en ce que**
le guide (11) est couvert au moyen d'un couvercle (12).

7. Siège selon la revendication 5 ou 6,
**caractérisé en ce que**
le guide (11) est courbé, et **en ce que** le dispositif de propulsion (10) de l'accoudoir (8) est connecté à l'accoudoir (8) au moyen d'un arbre flexible.

8. Siège selon l'une quelconque des revendications 1 à 7,
**caractérisé en ce que**
l'angle du mouvement de rotation de l'accoudoir (8) lors du déplacement du support de siège (3) de la position de conduite à la position de repos par rapport au dossier (4) est de 40 à 45°.

9. Siège selon l'une quelconque des revendications 1 à 8,
**caractérisé en ce que**
l'accoudoir (8) peut tourner autour d'un l'axe de rotation (9) qui est incliné à un angle de 10 - 20° par rapport à la verticale.

10. Siège selon l'une quelconque des revendications 1 à 9,
**caractérisé en ce que**
le support de siège (3) est monté de manière rotative par rapport à une carrosserie du véhicule automobile par l'intermédiaire d'un plateau rotatif (7).
